# EUROPEAN PATENT APPLICATION

(11) **EP 4 836 460 A1**
(43) Date of publication of application: **04.11.2026**
(21) Application number: 25747532.7
(22) Date of filing: 15.01.2025
(51) Int. Cl.: H04W 4/30

(54) **SENSING METHOD AND COMMUNICATION APPARATUS**

(30) Priority: 02.02.2024 CN 202410163289
(71) Applicant: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Huawei European IPR
(86) International application number: PCT/CN2025/072394
(87) International publication number: WO 2025/161956

(57) **Abstract**

Embodiments of this application provide a sensing method and a communication apparatus. The method includes: A first apparatus sends a first reference signal, where a time-frequency resource corresponding to the first reference signal is the same as a time-frequency resource corresponding to a second reference signal. The first reference signal is determined based on a first phase and a sequence (for example, a first sequence) corresponding to the second reference signal. The second reference signal is a reference signal used by a second apparatus to obtain sensing information of the first apparatus, and the first reference signal is a reference signal used by the first apparatus to interfere with the sensing information of the first apparatus. In the method, in a wireless sensing scenario, the first apparatus can perform privacy protection on sensing information of an associated user, thereby avoiding a problem of privacy leakage.

## Description

This application claims priority to Chinese Patent Application 202410163289.2, filed with the China National Intellectual Property Administration on February 2, 2024 and entitled "SENSING METHOD AND COMMUNICATION APPARATUS", which is incorporated herein by reference in its entirety.

### TECHNICAL FIELD

Embodiments of this application relate to the field of communication technologies, and more specifically, to a sensing method and a communication apparatus.

### BACKGROUND

With the development of communication technologies, wireless sensing is an important technology. In the wireless sensing technology, a sending device radiates electromagnetic waves and sends specific signals to an ambient environment. Correspondingly, a receiving device determines related information about the ambient environment by receiving electromagnetic waves and signals reflected by the environment and comparing and analyzing an association relationship between the sent signals and the received signals. For example, the receiving device can analyze, based on the relationship between the received signals and the sent signals, whether there is a to-be-detected or to-be-sensed target object in the environment, a distance between a scatterer and a transceiver device, an orientation or an angle (for example, a horizontal direction or a vertical direction) of the scatterer relative to the transceiver device, a moving speed of the scatterer relative to the transceiver device, and other information.

It can be learned that the wireless sensing technology may usually sense a relative position, a moving speed, micro-motion information, and the like of the target object. With the development of technologies, some consumers consider that the wireless sensing technology may infringe their privacy. Therefore, how to protect privacy of consumers in a wireless sensing scenario is a current research hotspot.

### SUMMARY

Embodiments of this application provide a sensing method and a communication apparatus, to implement, in a wireless sensing scenario, privacy protection on an apparatus associated with a user having a privacy protection requirement.

According to a first aspect, a sensing method is provided. The method may be performed by a first apparatus, or may be performed by a chip or a circuit of the first apparatus. This is not limited in this application. For ease of description, the following uses an example in which the method is performed by the first apparatus for description.

The method includes: The first apparatus sends a first reference signal, where a time-frequency resource corresponding to the first reference signal is the same as a time-frequency resource corresponding to a second reference signal, the first reference signal is determined based on a first phase and a first sequence, and the first sequence is a sequence corresponding to the second reference signal. The second reference signal is a reference signal used to obtain sensing information, and the first reference signal is a reference signal used to interfere with the sensing information or protect privacy.

It should be understood that the first phase may be a random phase. The first phase may be determined by the first apparatus. For example, the first phase is a random phase generated by the first apparatus on different symbols. The first phase can interfere with a sensing result of the second reference signal, thereby effectively protecting privacy of a user associated with the first apparatus.

It should be further understood that the interfered sensing information may be understood as sensing information of the user associated with the first apparatus, and the user may be a person or an object associated with the first apparatus.

It should be further understood that the first reference signal is a reference signal used to interfere with the sensing information, or it is understood that the first reference signal is a reference signal used to scramble the sensing information.

It should be further understood that the first sequence may be a sequence corresponding to frequency domain and/or a sequence corresponding to time domain. This is not limited in this application.

According to the foregoing technical solution, the first reference signal is determined based on the sequence (for example, the first sequence) of the second reference signal and the first phase. The first reference signal is used by the first apparatus to interfere with sensing information of the first apparatus, so that in a wireless sensing scenario, the first apparatus can perform privacy protection on the sensing information of the associated user, thereby avoiding a problem of privacy leakage.

With reference to the first aspect, in some possible implementations, that the first apparatus sends the first reference signal includes: The first apparatus sends the first reference signal at a first moment, where the first moment is the same as a moment at which the first apparatus receives the second reference signal, or the first moment is a moment estimated/predicted by the first apparatus for receiving the second reference signal, or the first moment is determined based on a moment at which the first apparatus receives a third reference signal, where the third apparatus is from a second apparatus.

It should be understood that the third reference signal may be a reference signal received from the second apparatus before the first apparatus receives the second reference signal. The first apparatus may determine, based on the moment at which the third reference signal is received, the moment (for example, the first moment) at which the second reference signal is received.

Optionally, when the second reference signal or the third reference signal may arrive at the first apparatus through a plurality of transmission paths, the first apparatus may determine the first moment based on a moment at which the second reference signal or the third reference signal arrives at the first apparatus earliest, or the first apparatus may determine the first moment based on a moment at which a signal is received on a transmission path with a highest signal power in the plurality of transmission paths.

According to the foregoing technical solution, the moment at which the first apparatus sends the first reference signal is the same as the moment at which the first apparatus receives the second reference signal, to enhance correlation between the first reference signal and the second reference signal, ensure that the first reference signal can interfere with the sensing information of the user associated with the first apparatus, and meet a privacy protection requirement of the user associated with the first apparatus.

With reference to the first aspect, in some possible implementations, a sequence of the first reference signal is determined by multiplying the first sequence by the first phase.

With reference to the first aspect, in some possible implementations, that the first apparatus sends the first reference signal includes: The first apparatus sends the first reference signal at a first moment, where a time interval between the first moment and a second moment is a first time interval, and the second moment is a moment at which the first apparatus receives the second reference signal, or the second moment is a moment estimated/predicted by the first apparatus for receiving the second reference signal, or the second moment is determined based on a moment at which the first apparatus receives a third reference signal; and the first reference signal is determined based on the first phase, the first sequence, and the first time interval, where the first time interval is not 0.

According to the foregoing technical solution, the first apparatus sends the first reference signal at the first moment. The time interval between the first moment and the second moment at which the second reference signal is received may be the first time interval, and the first time interval is not 0. In other words, the moment at which the first apparatus sends the first reference signal may not be strictly the same as the moment at which the first apparatus receives the second reference signal. When the first time interval is not 0, the first reference signal is determined based on the first phase, the first sequence, and the first time interval. Introducing an additional modulation signal into a frequency domain sequence is equivalent to shifting (or cyclically shifting) the signal in time domain. In this way, when the first apparatus sends the first reference signal and receives the second reference signal at different moments, the first reference signal can still interfere with the sensing information of the user associated with the first apparatus.

With reference to the first aspect, in some possible implementations, the first sequence includes a first frequency domain sequence, a sequence of the first reference signal in frequency domain is a second frequency domain sequence, and a signal that is of the second frequency domain sequence and that is mapped to a subcarrier *k* is *Axₖ*exp(-*j*2*πfₖT*)exp(*jθ*)*.* A is a complex constant, *xₖ* is a signal that is of the first frequency domain sequence and that is mapped to the subcarrier *k*, the first frequency domain sequence is a sequence of the second reference signal in frequency domain, *fₖ* is a center frequency of the subcarrier *k* or *fₖ* = *kf_{scs}*, *f_{scs}* is a subcarrier spacing, *T* is the first time interval, and *θ* is the first phase.

With reference to the first aspect, in some possible implementations, that the first apparatus sends the first reference signal includes:

The first apparatus sends the first reference signal based on a first power value, where the first power value is determined based on one or more of the following: a maximum value of a transmit power of the first apparatus, *α*₁*RSRP*₄ + *α*₂10log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$.
*α*₁ to *α*₅ are configured or preconfigured coefficients greater than or equal to 0, *RSRP*₄ is a receive power of a fourth reference signal, the fourth reference signal is from the second apparatus, *K* indicates a bandwidth of the first reference signal, PL is a path loss between the first apparatus and a receiver (for example, the second apparatus or another apparatus) of the second reference signal, *N'* is an integer, and A and C are constants.

It should be understood that the fourth reference signal and the third reference signal may be a same reference signal or different reference signals. This is not limited in this application.

It should be understood that the fourth reference signal and the second reference signal may be a same reference signal or different reference signals. This is not limited in this application.

It should be further understood that *N'* is an integer that is configured, preconfigured, or predefined, or *N'* is a smallest integer satisfying $\frac{cN ′}{B} > D$. c is a speed of light, B is a bandwidth of the first reference signal, and D is an allowed interference distance range of the first reference signal. Alternatively, D may be preconfigured or predetermined, or may be indicated by a system/network device by using configuration information. This is not limited in this application.

According to the foregoing technical solution, a transmit power for sending the first reference signal by the first apparatus is limited, so that interference of the first reference signal to sensing information of another target is reduced while an effect of interference of the first reference signal to the sensing information of the user associated with the first apparatus is ensured.

With reference to the first aspect, in some possible implementations, the first power value is a smallest value of one or more of the following: the maximum value of the transmit power of the first apparatus, *α*₁*RSRP*₄ + *α*₂10 log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$.

With reference to the first aspect, in some possible implementations, before the first apparatus sends the first reference signal, the method further includes: The first apparatus sends first information, where the first information indicates that the user associated with the first apparatus has a privacy protection requirement for sensing information, and/or the first information indicates that the first apparatus is to send the first reference signal.

It should be understood that, that the first information indicates that the first apparatus is to send the first reference signal may be understood as follows: The first information indicates that the first apparatus may send or needs to send the first reference signal, or the first information indicates that the first apparatus may interfere with or perform privacy protection on the sensing information of the first apparatus by using the first reference signal.

With reference to the first aspect, in some possible implementations, before the first apparatus sends the first reference signal, the method further includes: The first apparatus receives second information, where the second information indicates configuration information of the second reference signal, and the configuration information of the second reference signal includes information about a reference signal resource occupied by the second reference signal.

With reference to the first aspect, in some possible implementations, before the first apparatus sends the first information, the method further includes: The first apparatus performs authentication with a third apparatus, where the authentication is used to determine that the first apparatus can perform privacy protection on the sensing information of the user associated with the first apparatus.

It should be understood that the third apparatus and the second apparatus may be a same apparatus or different apparatuses. When the third apparatus and the second apparatus are different apparatuses, the second apparatus may be an apparatus within a coverage area of the third apparatus.

With reference to the first aspect, in some possible implementations, before the first apparatus sends the first reference signal, the method further includes: The first apparatus receives the configuration information of the second reference signal, where the configuration information of the second reference signal includes the time-frequency resource corresponding to the second reference signal.

With reference to the first aspect, in some possible implementations, the second information indicates that the second reference signal is used by the second apparatus to collect and/or estimate biometric sign data of a user within a coverage area of the second apparatus.

According to a second aspect, a sensing method is provided. The method may be performed by a second apparatus, or may be performed by a chip or a circuit of the second apparatus. This is not limited in this application. For ease of description, the following uses an example in which the method is performed by the second apparatus for description.

The method includes: The second apparatus receives a first reference signal from a first apparatus, where a time-frequency resource corresponding to the first reference signal is the same as a time-frequency resource corresponding to a second reference signal, the first reference signal is determined based on a first phase and a first sequence, and the first sequence is a sequence of the second reference signal. The second reference signal is a reference signal used to obtain sensing information, and the first reference signal is a reference signal used to interfere with the sensing information or protect privacy.

It should be understood that the second aspect corresponds to the first aspect. For technical effects, refer to the technical effects in the first aspect. Details are not described herein again.

With reference to the second aspect, in some possible implementations, a sequence of the first reference signal is determined by multiplying the first sequence by the first phase.

With reference to the second aspect, in some possible implementations, a transmit power of the first reference signal is a first power value, and the first power value is determined based on one or more of the following:
a maximum value of a transmit power of the first apparatus, *α*₁*RSRP*₄ + *α*₂10 log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$ .
*α*₁ to *α*₅ are configured or preconfigured coefficients greater than or equal to 0, *RSRP*₄ is a receive power of a fourth reference signal, the fourth reference signal is from the second apparatus, *K* indicates a bandwidth of the first reference signal, PL is a path loss between the first apparatus and a receiver (for example, the second apparatus or another apparatus) of the second reference signal, *N'* is an integer, and A and C are constants.

With reference to the second aspect, in some possible implementations, the first power value is a smallest value of one or more of the following: the maximum value of the transmit power of the first apparatus, *α*₁*RSRP*₄ + *α*₂10 log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$.

With reference to the second aspect, in some possible implementations, before the second apparatus receives the first reference signal from the first apparatus, the method further includes: The second apparatus receives first information from the first apparatus, where the first information indicates that a user associated with the first apparatus has a privacy protection requirement for sensing information, and/or the first information indicates that the first apparatus is to send the first reference signal.

With reference to the second aspect, in some possible implementations, the method further includes: The second apparatus sends second information, where the second information indicates configuration information of the second reference information, and the configuration information of the second reference signal includes information about a reference signal resource occupied by the second reference signal.

With reference to the second aspect, in some possible implementations, before the second apparatus receives the first reference signal from the first apparatus, the method further includes: The second apparatus performs authentication with the first apparatus, where the authentication is used to determine that the first apparatus can perform privacy protection on the sensing information of the user associated with the first apparatus.

With reference to the second aspect, in some possible implementations, before the second apparatus receives the first reference signal from the first apparatus, the method further includes: The second apparatus sends the configuration information of the second reference signal, where the configuration information of the second reference signal includes the time-frequency resource corresponding to the second reference signal.

With reference to the second aspect, in some possible implementations, the second information indicates that the second reference signal is used by the second apparatus to collect and/or estimate biometric sign data of a user within a coverage area of the second apparatus.

According to a third aspect, a communication apparatus is provided, including: a transceiver unit, configured to send a first reference signal, where a time-frequency resource corresponding to the first reference signal is the same as a time-frequency resource corresponding to a second reference signal, the first reference signal is determined based on a first phase and a first sequence, and the first sequence is a sequence of the second reference signal. The second reference signal is a reference signal used to obtain sensing information, and the first reference signal is a reference signal used to interfere with the sensing information or protect privacy.

It should be understood that the transceiver unit is further configured to perform receiving and sending processing in the first aspect.

In a possible implementation, the communication apparatus further includes a processing unit, and the processing unit is further configured to perform processing other than receiving and sending in the first aspect.

According to a fourth aspect, a communication apparatus is provided, including: a transceiver unit, configured to receive a first reference signal from a first device, where a time-frequency resource corresponding to the first reference signal is the same as a time-frequency resource corresponding to a second reference signal, the first reference signal is determined based on a first phase and a first sequence, and the first sequence is a sequence of the second reference signal. The second reference signal is a reference signal used to obtain sensing information, and the first reference signal is a reference signal used to interfere with the sensing information or protect privacy.

It should be understood that the transceiver unit is further configured to perform receiving and sending processing in the second aspect.

In a possible implementation, the communication apparatus further includes a processing unit, and the processing unit is further configured to perform processing other than receiving and sending in the second aspect.

According to a fifth aspect, a communication apparatus is provided. The apparatus is configured to perform the method provided in the first aspect and/or the second aspect. Specifically, the apparatus may include units and/or modules configured to perform the method provided in any one of the foregoing implementations of the first aspect and the second aspect, for example, a processing unit and/or a transceiver unit (or referred to as a communication unit).

In an implementation, the apparatus is a communication device (for example, a terminal device or a network device). When the apparatus is a communication device, the communication unit may be a transceiver or a transceiver unit, or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The apparatus includes: a memory, configured to store a program; and at least one processor, configured to execute a computer program or instructions stored in the memory, to perform the method provided in any one of the implementations of the first aspect and the second aspect.

In an implementation, the apparatus is a communication device (for example, a terminal device or a network device).

In another implementation, the apparatus is a chip, a chip system, or a circuit used in a communication device (for example, a first device or a second device).

According to a seventh aspect, this application provides a processor, configured to perform the methods provided in the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable medium stores program code executed by a device, and the program code is used to perform the method provided in any one of the foregoing implementations of the first aspect and the second aspect.

According to a ninth aspect, a computer program product including instructions is provided. When the computer program product is run on a computer, the computer is caused to perform the method provided in any one of the implementations of the first aspect and the second aspect.

According to a tenth aspect, a chip is provided. The chip includes a processor and a communication interface. The processor reads, through the communication interface, instructions stored in a memory, to perform the method provided in any one of the implementations of the first aspect and the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations of the first aspect and the second aspect.

### BRIEF DESCRIPTION OF DRAWINGS

FIG. 1 is a diagram of a system architecture to which an embodiment of this application is applicable;
FIG. 2 is a diagram of a scenario to which an embodiment of this application is applicable;
FIG. 3 is a schematic flowchart of a sensing method according to an embodiment of this application;
FIG. 4 is a diagram of a time unit in which a first device sends a first reference signal;
FIG. 5 is a diagram of another time unit in which a first device sends a first reference signal;
FIG. 6 is a diagram of simulation of leakage of a first reference signal in a delay profile;
FIG. 7a and FIG. 7b each are a diagram of simulation of a delay domain;
FIG. 8 is a diagram of a communication apparatus 800 according to an embodiment of this application;
FIG. 9 is a diagram of another communication apparatus 900 according to an embodiment of this application; and
FIG. 10 is a diagram of a chip system 1000 according to an embodiment of this application.

### DESCRIPTION OF EMBODIMENTS

The following describes technical solutions of embodiments of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a cellular system related to a 3rd generation partnership project (3rd generation partnership project, 3GPP), a worldwide interoperability for microwave access (worldwide interoperability for microwave access, WiMAX) communication system, a wireless fidelity (Wi-Fi) system, a 5th generation (5th generation, 5G) system, a new radio (New Radio, NR) system, or the like.

The technical solutions provided in this application may be further applied to a future communication system, for example, a 6th generation (6th generation, 6G) mobile communication system. This is not limited in this application.

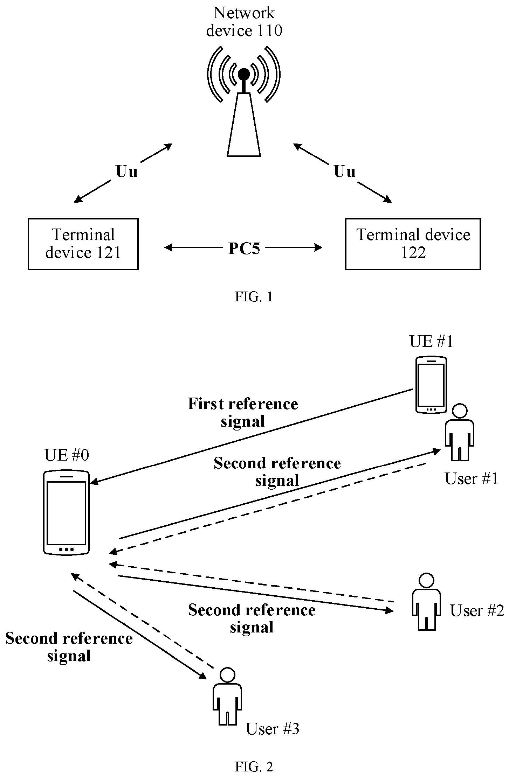

FIG. 1 is a diagram of an architecture of a communication system to which an embodiment of this application is applicable. In the communication system shown in FIG. 1, there are mainly two types of communication interfaces: a communication interface (for example, a Uu interface) between a terminal device 121 and a network device 110 and a communication interface (for example, a proximity-based services communication 5 (proximity-based services communication 5, PC5) interface) between the terminal device 121 and a terminal device 122. The Uu interface is used for communication between user equipment and a base station or a roadside unit, and the PC5 interface is used for sidelink communication between terminals. On the Uu 5 interface, a link used by a terminal to send data to a base station is referred to as an uplink (uplink), and a link used by the terminal to receive data sent by the base station is referred to as a downlink (downlink). A communication interface between terminal devices is referred to as a PC5 interface. A link for data transmission between the terminal devices on the PC5 interface is referred to as a sidelink (sidelink, SL) or a direct link. The sidelink is usually used in a scenario in which direct communication may be performed between devices, for example, device-to-device (device-to-device, D2D). In this scenario, data transmission between the devices does not need to be performed through the base station. The system architecture 10 to which the communication method provided in this embodiment of this application is applicable may not include the network device shown in FIG. 1. This is not limited in this application. Vehicle-to-everything (vehicle-to-everything, V2X) communication may be considered as a special case of D2D communication. In addition, in an indoor commercial scenario, various high-rate transmission services may be implemented through direct communication between terminal devices, for example, high-definition projection or file sharing between a mobile phone terminal and a smart screen, and service transmission between a mobile phone terminal and virtual reality (virtual reality, VR) glasses.

The following briefly describes the devices shown in FIG. 1.
1. A terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device having a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or compute device having a wireless communication function, another processing device, vehicle-mounted device, or wearable device connected to a wireless modem, a terminal device in a 5G network, and a terminal device in a future evolved public land mobile network (public land mobile network, PLMN). This is not limited in embodiments of this application.
   In embodiments of this application, the terminal device may alternatively be a terminal device in an internet of things (internet of things, IoT) system. An IoT is an important part of future development of information technologies. A main technical feature of the IoT is connecting a thing to a network by using a communication technology, to implement an intelligent network for human-machine interconnection and thing-thing interconnection. In addition, the terminal device may alternatively be a wearable device. The wearable device may also be referred to as a wearable intelligent device, and is a general term of wearable devices, such as glasses, gloves, watches, clothes, and shoes, that are intelligently designed and developed for daily wear by using a wearable technology. The wearable device is a portable device that can be directly worn on a body or integrated into clothes or accessories of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and include devices that dedicated to only one type of application function and need to work with other devices such as smartphones, for example, various smart bands or smart jewelry for monitoring physical signs.
2. A network device may be a device configured to communicate with the terminal device. The network device may be a base transceiver station (Base Transceiver Station, BTS) in a global system for mobile communications (Global System for Mobile communications, GSM) or a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application. On the Uu interface, data and radio resource control (radio resource control, RRC) signaling are transmitted between the terminal device and the base station via a radio bearer. A radio bearer used for data transmission is referred to as a data radio bearer (data radio bearer, DRB), and a bearer used for RRC signaling transmission is referred to as a signaling radio bearer (signaling radio bearer, SRB). A radio bearer includes a packet data convergence protocol (packet data convergence protocol, PDCP) entity and a radio link control (radio link control, RLC) bearer. One RLC bearer includes one RLC entity and a corresponding logical channel (logical channel, LCH). A configuration of the radio bearer is configurations of the PDCP entity, the RLC entity, and the logical channel of the radio bearer. The configuration of the radio bearer needs to meet a quality of service (quality of service, QoS) requirement of a service transmitted via the radio bearer. On the Uu interface, the configuration of the radio bearer is configured by the network device for the terminal. On the PC5 interface, data and RRC signaling also need to be transmitted between terminal devices via a radio bearer. The radio bearer on the PC5 interface may be referred to as a sidelink radio bearer (sidelink radio bearer, SL RB). In a long term evolution (long term evolution, LTE) V2X system, radio bearers on the PC5 interface are separately established by a transmitter terminal and a receiver terminal, and configurations of the radio bearers are standard-predefined or are determined by the transmitter terminal device and the receiver terminal device.
3. A core network device is configured to provide a user connection, perform user management, and complete service bearing. For example, establishment of the user connection includes mobility management (mobile management, MM), paging (paging), and the like. The user management includes user description, QoS, security (corresponding security measures provided by an authentication center include security management of mobile services and security processing on external network access), and the like. A bearer connection includes an external public switched telephone network (public switched telephone network, PSTN), an external circuit data network and packet data network, an internet (Internet), and the like. For example, the core network device may be an access and mobility management function (access and mobility management function, AMF) that is mainly responsible for signaling processing, that is, control plane functions, including functions such as access control, mobility management, attachment and detachment, and gateway selection. Alternatively, the core network device may be a session management function (session management function, SMF), unified data management (unified data management, UDM), or the like. Alternatively, the core network device may be a sensing function network element or a network element having a sensing function. The sensing function network element may be responsible for initiating a sensing process in a network, collecting sensing information, and the like. This is not limited in this application.

With the development of communication technologies, a wireless sensing technology is a very important technology. The wireless sensing technology is also referred to as a non-sensor scenario sensing technology. In this technology, a feature of a signal propagation space (channel) is obtained by analyzing a change of a wireless signal in a propagation process, to implement scenario sensing.

In the wireless sensing technology, a sending device radiates electromagnetic waves and sends specific signals to an ambient environment. Correspondingly, a receiving device receives electromagnetic waves and signals reflected by the environment. A transceiver device determines related information about the ambient environment of the device by comparing and analyzing an association relationship between the sent signals and the received signals. For example, the transceiver device can analyze, based on the relationship between the received signals and the sent signals, whether there is a to-be-detected or to-be-sensed target object in the environment, a distance between a scatterer and a transceiver device, an orientation or an angle (for example, a horizontal direction or a vertical direction) of the scatterer relative to the transceiver device, a moving speed of the scatterer relative to the transceiver device, and other information.

The wireless sensing technology may usually sense a relative position, a moving speed, micro-motion information, and the like of the target object. With the development of technologies, some consumers consider that the wireless sensing technology may infringe their privacy. Therefore, how to protect privacy of consumers in a wireless sensing scenario is a current research hotspot.

For the foregoing research hotspot, an existing technical solution proposes an area-based sensing authorization mechanism. In this mechanism, an authorized device can perform wireless sensing only in specific authorized areas, for example, outdoor scenarios such as highways, railways, and streets. In scenarios such as highways and railways, a base station usually senses only large objects such as trains and vehicles, and does not sense small objects such as people. Therefore, a privacy leakage problem caused by sensing is small. For example, in a street scenario, users are densely distributed, an environment is complex, and it is difficult to obtain sensing information of a single person. Therefore, a privacy leakage problem caused by sensing is also small. However, the area-based sensing authorization mechanism usually has strict area division. To be specific, if some users in an area have privacy protection requirements, wireless sensing cannot be performed in the area. Consequently, overall benefits of sensing to an entire system (for example, a 5G system or a 6G system) are reduced.

In view of the foregoing problem, this application provides a sensing method, to implement, in a wireless sensing scenario, privacy protection on a device associated with a user having a privacy protection requirement. The following describes the method provided in this application by using an example.

FIG. 2 is a diagram of a scenario according to an embodiment of this application. It is assumed that UE #0 senses and obtains related information about an ambient environment by using a reference signal (for example, a second reference signal). For example, the UE #0 may sense the ambient environment in a monostatic manner, or the UE #0 may send a reference signal, and another device (not shown in the figure) receives the reference signal to sense the ambient environment. In addition, there are three users (for example, people that can be sensed) in the scenario: a user #1, a user #2, and a user #3, and there is UE #1. The UE #1 is a device associated with the user #1, and the user #1 is a user associated with the UE #1. The second reference signal sent by the UE #0 arrives at a receiver (for example, the UE #0 in a monostatic sensing mode, and another device in a bistatic sensing mode) of the second reference signal after being reflected or scattered by the user #1, the user #2, and the user #3. The reference signal received by the receiver includes sensing information of the user #1, the user #2, and the user #3, for example, Doppler information and/or micro-motion information. It is assumed that the user #1 has a privacy protection requirement, and the UE #1 associated with the user #1 may send a reference signal (for example, a first reference signal). The first reference signal is used to interfere with the sensing information of the user #1, so that the receiver of the second reference signal cannot determine the accurate sensing information of the user #1, thereby implementing privacy protection on the user #1 to some extent.

It should be understood that, in this embodiment of this application, the UE #0 may alternatively be replaced with a network device, for example, an access network device.

With reference to the scenario shown in FIG. 2, the following describes in detail the method provided in this application with reference to a specific diagram of the method.

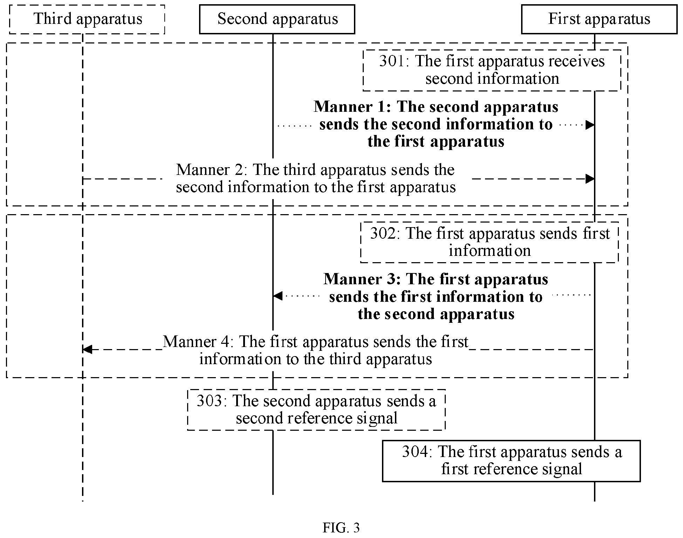

FIG. 3 is a schematic flowchart of a sensing method according to an embodiment of this application.

It should be understood that, in the method shown in FIG. 3, an example in which a first apparatus is associated with a terminal device having a privacy protection requirement and a second apparatus is a device that sends a reference signal used to sense an ambient environment is used. It is assumed that the first apparatus is in a sensing range of the second apparatus/an area in which the second apparatus is deployed.

It should be further understood that the second apparatus may be a network device, a terminal device, or a unit having a sensing function (sensing function, SF). This is not limited in this application. When the second apparatus is a terminal device, the second apparatus may be the UE #1 in FIG. 2, and the first apparatus may be the UE #0 in FIG. 2.

It should be understood that, in the method shown in FIG. 3, the second apparatus and a third apparatus may be a same apparatus.

The method shown in FIG. 3 may include the following steps.

301: The first apparatus receives second information.

The second information indicates configuration information of a second reference signal, and the configuration information of the second reference signal includes information about a reference signal resource occupied by the second reference signal. Specifically, the configuration information may include configuration information related to one or more of the following: a time domain resource, a frequency domain resource, and a code domain resource that are occupied by the second reference signal, and a sequence used by the second reference signal.

It should be understood that the second reference signal is used to perform wireless sensing on an ambient environment. For example, when the second apparatus sends the second reference signal, and the second apparatus receives the second reference signal reflected or scattered by the environment, it may be considered that the second apparatus performs wireless sensing on the ambient environment by using the second reference signal. For another example, when the second apparatus sends the second reference signal, and a fourth apparatus receives the second reference signal reflected or scattered by the environment, it may be considered that the fourth apparatus or the second apparatus and the fourth apparatus sense the ambient environment. For another example, a receiver (for example, the second apparatus or the fourth apparatus) of the second reference signal may report a receiving measurement result of the second reference signal to another apparatus, for example, the third apparatus. In this case, it may also be considered that the third apparatus performs wireless sensing on the ambient environment.

In a possible implementation, the second information includes a purpose or a usage of sending the second reference signal, and the usage of the second reference signal includes that the second reference signal is a reference signal used for wireless sensing. For example, the second information indicates that the second reference signal is used to collect and/or estimate biometric sign data (for example, Doppler information and/or micro-motion information) of a surrounding user.

It should be understood that a reference signal resource is usually in one-to-one correspondence with a reference signal, and the reference signal resource may be usually understood as a resource used to send the reference signal. Therefore, in embodiments of this application, the "reference signal" and "reference signal resource" may be replaced with each other in some scenarios. For example, "configuration information of a reference signal" may be understood as "configuration information of a reference signal resource".

It should be understood that, that the first apparatus receives the second information may be that the first apparatus receives the second information sent by the second apparatus, or that the first apparatus receives the second information sent by the third apparatus. Specifically, as shown in step 301 in FIG. 3, the first apparatus may receive the second information in the following two manners.

**Manner 1:** The second apparatus sends the second information to the first apparatus. Correspondingly, the first apparatus receives the second information sent by the second apparatus.

For example, the second apparatus may determine the reference signal resource occupied by the second reference signal, and send the second information to the first apparatus. When both the second apparatus and the first apparatus are terminal devices, the second apparatus may send the second information to the first apparatus over a sidelink (for example, a sidelink). When the second apparatus is a network device and the first apparatus is a terminal device, the second apparatus may send the second information to the first apparatus over a downlink.

For another example, the third apparatus may first determine the reference signal resource occupied by the second reference signal, and send the second information to the second apparatus, and then the second apparatus forwards the second information to the first apparatus. When both the second apparatus and the first apparatus are terminal devices, the third apparatus may be a network device or a core network device. The third apparatus may first send configuration information of a second reference signal resource to the second apparatus over a downlink or a link between the core network and the terminal device, and the second apparatus may send the second information to the first apparatus over a sidelink. When the second apparatus is a network device and the first apparatus is a terminal device, the third apparatus may be a core network device. The third apparatus may send the resource configuration information of the second reference signal over a link between the core network device and the network device, and the second apparatus may send the second information to the first apparatus over a downlink.

**Manner 2:** The third apparatus sends the second information to the first apparatus. Correspondingly, the first apparatus receives the second information sent by the third apparatus.

For example, the third apparatus determines the reference signal resource occupied by the second reference signal, and sends the second information to the first apparatus without forwarding by the second apparatus. When both the third apparatus and the first apparatus are terminal devices, the third apparatus may send the second information to the first apparatus over a sidelink. When the third apparatus is a network device and the first apparatus is a terminal device, the third apparatus may send the second information to the first apparatus over a downlink. When the third apparatus is a core network device, and the first apparatus is a terminal device, the third apparatus may send the second information to the first apparatus over a link between the core network device and the terminal device.

It should be understood that the first apparatus may receive the second information in any one or both of Manner 1 and Manner 2. Correspondingly, the first apparatus may determine, based on the second information, that the second reference signal is used to perform wireless sensing on an environment, in other words, the second reference signal is used to obtain sensing information of a user in the environment.

302: The first apparatus sends first information.

The first information indicates that a user associated with the first apparatus has a privacy protection requirement for sensing information, and/or the first information indicates that the first apparatus is to send a first reference signal. The first reference signal is a reference signal used to interfere with the sensing information or protect privacy.

It should be understood that, that the first information indicates that the first apparatus is to send the first reference signal may be understood as follows: The first information indicates that the first apparatus may send or needs to send the first reference signal, or the first information indicates that the first apparatus may interfere with or perform privacy protection on sensing information of the first apparatus by using the first reference signal.

It should be further understood that the first apparatus may send the first information in the following two manners.

**Manner 3:** The first apparatus sends the first information to the second apparatus. Correspondingly, the second apparatus receives the first information sent by the first apparatus.

For example, the first apparatus determines that the user associated with the first apparatus has a privacy protection requirement for sensing information, and the first apparatus may send the first information to the second apparatus. When both the first apparatus and the second apparatus are terminal devices, the second apparatus may send the first information to the second apparatus over a sidelink (for example, a sidelink). When the second apparatus is a network device and the first apparatus is a terminal device, the first apparatus may send the first information to the second apparatus over an uplink.

For another example, the first apparatus determines that the user associated with the first apparatus has a privacy protection requirement for sensing information, the first apparatus may send the first information to the third apparatus, and the third apparatus may forward the first information to the second apparatus. When both the second apparatus and the first apparatus are terminal devices, the third apparatus may be a network device or a core network device. The first apparatus may send the first information to the third apparatus over an uplink or a link between the core network device and the terminal device, and the third apparatus may forward the first information to the second apparatus over a downlink or a link between the core network device and the terminal device. When the second apparatus is a network device and the first apparatus is a terminal device, the third apparatus may be a core network device. The first apparatus may send the first information to the third apparatus over a link between the terminal device and the core network device, and the third apparatus may forward the first information to the second apparatus over a link between the core network device and the network device.

**Manner 4:** The first apparatus sends the first information to the third apparatus. Correspondingly, the third apparatus receives the first information from the first apparatus.

For example, the first apparatus determines that the user associated with the first apparatus has a privacy protection requirement for sensing information, and the first apparatus sends the first information to the third apparatus. When both the third apparatus and the first apparatus are terminal devices, the first apparatus may send the first information to the third apparatus over a sidelink. When the third apparatus is a network device and the first apparatus is a terminal device, the first apparatus may send the first information to the third apparatus over an uplink. When the third apparatus is a core network device and the first apparatus is a terminal device, the first apparatus may send the first information to the third apparatus over a link between the terminal device and the core network device.

It should be understood that the first apparatus may send the first information in any one or both of Manner 3 and Manner 4. Correspondingly, after the second apparatus or the third apparatus receives the first information, the second apparatus or the third apparatus may determine, based on the first information, that the user associated with the first apparatus has a privacy protection requirement for sensing information of the user.

303: The second apparatus sends the second reference signal.

The second reference signal is used to perform wireless sensing on an ambient environment. For example, the second apparatus sends a specific sequence on a specific time-frequency resource based on the configuration information that is of the second reference signal resource and that is indicated by the second information in step 301.

It should be understood that the second apparatus may sense the ambient environment by using the second reference signal in a monostatic manner, or the second apparatus may sense the ambient environment by using the second reference signal in a bistatic manner. When the second apparatus senses the ambient environment by using the second reference signal in a monostatic manner, for example, the second apparatus serves as a transmitter to send the second reference signal, and correspondingly, the second apparatus serves as a receiver to receive the second reference signal returned after the second reference signal is reflected or scattered by a scatterer in the ambient environment. When the second apparatus senses the ambient environment by using the second reference signal in a bistatic manner, for example, the second apparatus serves as a transmitter to send the second reference signal, and another apparatus (for example, the third apparatus or the fourth apparatus) serves as a receiver to receive the second reference signal that arrives after the second reference signal is reflected or reflected by a scatterer in the ambient environment.

304: The first apparatus sends the first reference signal.

Correspondingly, the receiver of the second reference signal receives the first reference signal. The receiver of the second reference signal may be the second apparatus, the third apparatus, or the fourth apparatus. This is not limited in this application.

The first reference signal is a reference signal used to interfere with sensing information (for example, sensing information determined based on the second reference signal) or protect privacy (for example, privacy of the user associated with the first apparatus).

It should be understood that a time-frequency resource on which the first reference signal is located is the same as a time-frequency resource on which the second reference signal is located, so that a signal received by the receiver (for example, the second apparatus, the third apparatus, or the fourth apparatus) of the first reference signal is a superposed signal of the first reference signal and the second reference signal. However, because the receiver of the second reference signal cannot determine the specific first reference signal, the sensing information determined by the receiver by using the second reference signal is interfered with by the first reference signal, in other words, the first reference signal plays a role of privacy protection for the sensing information of the first device.

In an example, when the time-frequency resource corresponding to the first reference signal and the time-frequency resource corresponding to the second reference signal are resources in an orthogonal frequency division multiplexing (orthogonal frequency division multiplexing, OFDM) system, the time-frequency resource corresponding to the first reference signal and the time-frequency resource corresponding to the second reference signal occupy a same symbol and a same subcarrier.

It should be further understood that the first reference signal is determined based on a first phase and a first sequence, and the first sequence is a sequence corresponding to the second reference signal. The first phase may be a random phase. For example, the first phase may be determined by the first apparatus (for example, different random phases generated on different symbols). This is not limited in this application. The first sequence may be a sequence in time domain and/or frequency domain. This is not limited in this application.

It should be understood that, to enable the first reference signal sent by the first apparatus to interfere only with the sensing information of the user associated with the first apparatus, the following several methods may be used for implementation.

**Method 1: The first apparatus sends the first reference signal at a first moment. The first moment is the same as a second moment. The second moment is a moment at which the first apparatus receives the second reference signal, or the second moment is a moment estimated/predicted by the first apparatus for receiving the second reference signal.**

It should be understood that, when the second moment is not limited, the first moment may also be understood as the moment at which the first apparatus receives the second reference signal, or the first moment is the moment estimated/predicted by the first apparatus for receiving the second reference signal.

Optionally, when the first apparatus may receive the second reference signal through a plurality of paths, the second moment is a moment at which the first apparatus receives the second reference signal through a first path, or the second moment is a moment estimated/predicted by the first apparatus for receiving the second reference signal through the first path. The first path is a path with a smallest delay between the first apparatus and the second apparatus, may be understood as a path through which a signal can arrives at the first apparatus earliest after being sent from the second apparatus, may be understood as a path with smallest channel attenuation between the first apparatus and the second apparatus, or may be understood as a path through which a signal arrives at the first apparatus with a largest power (or energy or amplitude) after being sent from the second apparatus.

In a possible implementation, the first apparatus sends the first reference signal at the moment (for example, the second moment) at which the first apparatus receives the second reference signal. The moment at which the first apparatus receives the second reference signal is the same as the moment at which the first apparatus sends the first reference signal.

In another possible implementation, the first apparatus may estimate or predict, based on a moment at which another reference signal (for example, a third reference signal) is received, the moment (the second moment) at which the second reference signal is received, and send the first reference signal at the first moment. The another reference signal (for example, the third reference signal) is from the second apparatus.

It should be understood that the first reference signal is determined based on the first sequence corresponding to the second reference signal and the first phase, and the moment at which the first apparatus sends the first reference signal is the same as the moment at which the first apparatus receives the second reference signal, so that correlation between the first reference signal and the second reference signal is high, and the first reference signal can interfere with a signal generated by reflecting the second reference signal by the user associated with the first apparatus, thereby protecting the sensing information of the first apparatus.

In an example, the first reference signal is determined by multiplying the first sequence by the first phase. The first sequence is the sequence corresponding to the second reference signal, the first sequence includes a first frequency domain sequence, and the first phase may be a random phase determined by the first apparatus. For example, a frequency domain sequence of the first reference signal is obtained by multiplying the first frequency domain sequence by the first phase (to be specific, each element in the first frequency domain sequence is multiplied by the first phase to form the frequency domain sequence of the first reference signal). The first frequency domain sequence is a frequency domain sequence corresponding to the second reference signal. For another example, a time domain sequence of the first reference signal is obtained by multiplying a first time domain sequence by the first phase (to be specific, each element in the first time domain sequence is multiplied by the first phase to form the time domain sequence of the first reference signal). The first time domain sequence is a time domain sequence corresponding to the second reference signal. When the first apparatus needs to send the first reference signal in a plurality of different time units (for example, OFDM symbols), first phases determined in all of the time units may be different.

It should be understood that, in this embodiment of this application, *θ* is used to represent the first phase, and multiplying by the first phase may be represented as multiplying by exp(*jθ*) instead of directly multiplying by *θ*.

With reference to Example 1 and Example 2, the following describes, by using examples, specific content of determining the second moment by the first apparatus (this method may also be understood as determining the first moment by the first apparatus).

**Example 1:** The first apparatus determines, based on the configuration information of the second reference signal, a time-frequency resource on which the first apparatus receives the second reference signal, and the first apparatus receives the second reference signal on the time-frequency resource corresponding to the second reference signal. The first apparatus uses the moment at which the second reference signal is received as the second moment.

For example, the first apparatus may determine, based on the configuration information that is of the second reference signal and that is indicated by the second information in step 301, the time-frequency resource corresponding to the second reference signal. The first apparatus may receive the second reference signal on the time-frequency resource corresponding to the second reference signal. The first apparatus uses the moment at which the second reference signal is received as the second moment. The first apparatus sends the first reference signal at the second moment. Specifically, the first apparatus may determine, by using a technology, for example, multipath identification, a plurality of moments at which the second reference signal arrives at the first apparatus, and determine an earliest moment or a moment at which a power (or energy or amplitude) is the largest as the second moment.

**Example 2:** The first apparatus estimates/predicts, based on a moment at which the third reference signal is received, the second moment at which the first apparatus receives the second reference signal.

For example, before step 303, the method shown in FIG. 3 may further include: The second apparatus sends the third reference signal.

The first apparatus receives the third reference signal, and the third reference signal is from the second apparatus. The first apparatus estimates/predicts, based on the moment at which the third reference signal is received, the moment at which the second reference signal is received.

In an example, when the second apparatus sends the third reference signal, and the third reference signal arrives at the first apparatus through a plurality of transmission paths, the first apparatus may select, from the plurality of transmission paths according to a specific rule, a path corresponding to a moment at which the third reference signal arrives at the first apparatus, and use the moment as the moment at which the third reference signal arrives at the first apparatus. For example, the first apparatus may select, from the plurality of transmission paths, a transmission path corresponding to an arrival moment at which the third reference signal arrives at the first apparatus earliest, and use the moment as the moment at which the third reference signal arrives at the first apparatus. Alternatively, the first apparatus may select, from the plurality of transmission paths, a transmission path corresponding to an arrival moment at which a signal power (or energy or amplitude) of the third reference signal is the largest or attenuation is the smallest, and use the moment as the moment at which the third reference signal arrives at the first apparatus.

It should be understood that the first apparatus estimates/predicts, based on the moment at which the third reference signal is received, the second moment at which the first apparatus receives the second reference signal. For example, it is assumed that the third reference signal is configured in a symbol a, the second reference signal is configured in a symbol b, and a start position of the symbol b is T after a start position of the symbol a, or an end position of the symbol b is T after an end position of the symbol a. If it is determined that the moment at which the third reference signal arrives at the first apparatus is T₃, the second moment may be estimated/predicted or determined as T₃+T.

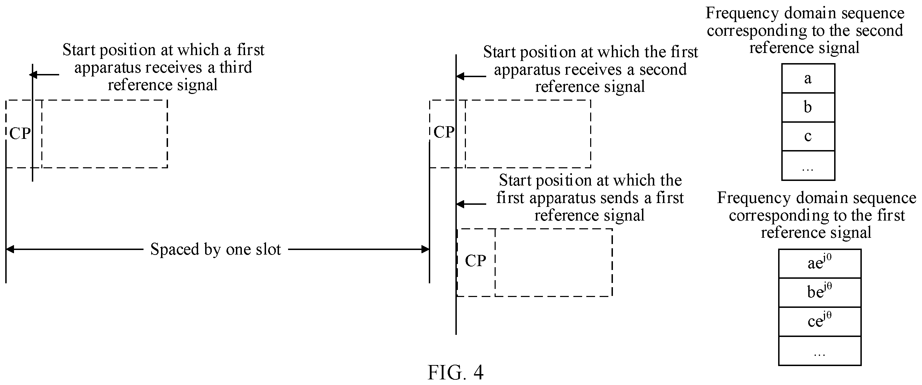

As shown in FIG. 4, it is assumed that the third reference signal and the second reference signal are configured on symbols with a same symbol index in adjacent slots for transmission. One OFDM symbol includes a cyclic prefix (cyclic prefix, CP) part and a payload part. It is assumed that the third reference signal is located on a symbol 0 in a slot for transmission, in other words, the third reference signal is located on a 1^{st} symbol in a slot for transmission. After receiving the third reference signal, the first apparatus may determine a start position at which the second reference signal is received.

An interval between sending the third reference signal by the second apparatus and sending the second reference signal by the second apparatus is one slot. In other words, in a period of time, it is assumed that relative positions of the first apparatus and the second apparatus do not change, to be specific, a period from sending the second reference signal by the second apparatus to receiving the second reference signal by the first apparatus is the same as a period from sending the third reference signal by the second apparatus to receiving the third reference signal by the first apparatus. In other words, the first apparatus can determine, based on a start position at which the third reference signal is received, the start position at which the second reference signal is received. The first apparatus may determine, based on the moment at which the third reference signal is received, the moment at which the second reference signal is received (for example, the second moment), and send the first reference signal at the second moment. As shown in FIG. 4, a start position at which the first apparatus sends the first reference signal is aligned with a corresponding start position at which the first apparatus receives the second reference signal.

As shown in FIG. 4, it is assumed that the first frequency domain sequence corresponding to the second reference signal sent by the second apparatus on the second reference signal resource is a, b, c, d, ..., and a frequency domain sequence corresponding to the first reference signal sent by the first apparatus on a first reference signal resource (a time-frequency resource that is the same as the second reference signal resource) is obtained by multiplying the entire first frequency domain sequence by *e^{jθ}*, that is, ..., where e is a natural constant, j is an imaginary unit, and *θ* is a random first phase determined by the first apparatus.

It should be understood that, in Example 1 and Example 2, a possibility that a capability of the first apparatus is limited is considered, to be specific, there may be a specific time difference between the moment at which the first apparatus receives the second reference signal and the moment at which the first apparatus sends the first reference signal, but the time difference needs to be less than or equal to a specific threshold. The threshold is preset or protocol/system-predefined, or is determined based on the capability of the first apparatus. This is not limited in this application.

**Method 2: The first apparatus sends the first reference signal at a first moment. A time interval between the first moment and a second moment is a first time interval, the second moment is a moment at which the first apparatus receives the second reference signal, or the second moment is a moment estimated/predicted by the first apparatus for receiving the second reference signal, and the first time interval is not 0.**

For detailed descriptions of determining the second moment by the first apparatus, refer to the specific descriptions in Method 1. Details are not described herein again.

For example, when the first moment is later than the second moment, the first time interval is a positive value; or when the first moment is earlier than the second moment, the first time interval is a negative value.

The first reference signal is determined based on the first phase, the first sequence, and the first time interval.

It should be understood that the time interval between the first moment and the second moment is not 0, in other words, the first moment at which the first apparatus sends the first reference signal is different from the second moment at which the first apparatus receives the second reference signal. Considering that the first moment is different from the second moment, to ensure correlation between the first reference signal of the first apparatus and the second reference signal reflected by the user associated with the first apparatus, and protect the sensing information of the first apparatus, an additional modulation signal may be introduced into the frequency domain sequence corresponding to the first reference signal, to be specific, using the additional modulation signal in frequency domain is equivalent to shifting the first reference signal in time domain. In this way, even if the first apparatus receives the second reference signal and sends the first reference signal at different moments, the first reference signal sent by the first apparatus can still be used to simulate the reflected signal corresponding to the second reference signal.

In an example, it is assumed that a sequence of the first reference signal in frequency domain is a second frequency domain sequence, and a signal that is of the second frequency domain sequence and that is mapped to a subcarrier *k* is *Axₖ*exp(-*j*2*πfₖT*)exp(*jθ*). A is a complex constant (for example, 1), *xₖ* is a signal that is of the first frequency domain sequence (namely, the frequency domain sequence of the second reference signal) and that is mapped to the subcarrier *k*, *fₖ* is a center frequency of the subcarrier *k* or *fₖ* = *kf_{scs}*, *f_{scs}* is a subcarrier spacing, *T* is the first time interval, and *θ* is the first phase.

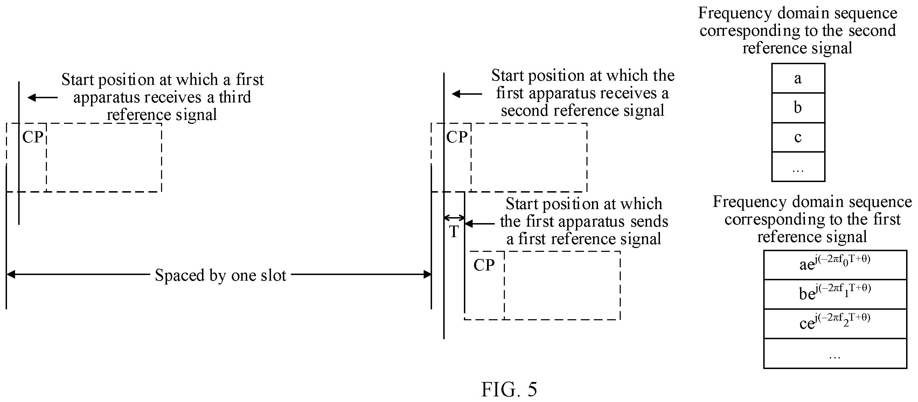

As shown in FIG. 5, it is assumed that the moment at which the first apparatus sends the first reference signal is earlier than the moment at which the first apparatus receives the second reference signal, and the first time interval is time T. To be specific, the sequence of the first reference signal sent by the first apparatus in frequency domain may be changed, so that introducing an additional modulation signal into the first reference signal in frequency domain is equivalent to shifting the first reference signal in time domain, as shown in FIG. 5. The frequency domain sequence corresponding to the second reference signal sent by the second apparatus is a, b, c, d, ..., and the frequency domain sequence corresponding to the first reference signal sent by the first apparatus is *ae*^{*j*(-2*πf*₀*T+θ*)}, *be*^{*j*(-2*πf*₁*T+θ*)}, *ce*^{*j*(-2*πf*₂*T+θ*)}, *de*^{*j*(-2*πf*₃*T*+*θ*)}, ....

In another example, it is assumed that a sequence of the first reference signal in time domain is a second time domain sequence, and the second time domain sequence is obtained by multiplying a sequence obtained by cyclically shifting a first time domain sequence rightward by T/Tₛ bits by exp(*jθ*), where the first time domain sequence is a sequence of the second reference signal in time domain. To be specific, the first time domain sequence is cyclically shifted by T/Tₛ bits, and then each element in a shifted sequence is multiplied by exp(*jθ*), where *θ* is the first phase. T is the first time interval, and Tₛ is a length of a symbol, for example, 1/(*N_{IFFT}f_{scs}*), where *N_{IFFT}* is a quantity of points on which fast inverse Fourier transform is performed in frequency domain. When T/Tₛ is not an integer, T/Tₛ may be rounded up or rounded down. When T is less than 0, it may be understood as that the second time domain sequence is obtained by multiplying a sequence obtained by cyclically shifting the first time domain sequence leftward by -T/Tₛ bits by exp(*jθ*). It should be understood that the time domain sequence is a time domain sequence of a payload part in one symbol. A sequence of a CP part is correspondingly adjusted based on a changed sequence of the payload part.

It should be understood that, based on the descriptions in Method 1 and Method 2, to ensure that the first reference signal sent by the first apparatus can interfere with the second reference signal reflected by the first apparatus to the receiver of the second reference signal, and protect the sensing information of the first apparatus, the moment at which the first apparatus sends the first reference signal may be aligned with the moment at which the first apparatus receives the second reference signal, so that correlation between the first reference signal and the second reference signal reflected to the receiver of the second reference signal is improved. Alternatively, when there is the first time interval between the moment at which the first apparatus sends the first reference signal and the moment at which the first apparatus receives the second reference signal, introducing an additional modulation signal into the frequency domain sequence of the first reference signal is equivalent to shifting the first reference signal in time domain, so that correlation between the first reference signal sent by the first apparatus and the second reference signal reflected to the receiver of the second reference signal is improved, and the sensing information of the user associated with the first apparatus is interfered with, thereby effectively protecting privacy of the user associated with the first apparatus.

It should be further understood that, to ensure an effect of interference of the first reference signal sent by the first apparatus to the sensing information of the user associated with the first apparatus, and reduce sensing interference of the first reference signal to another user, a transmit power for sending the first reference signal by the first apparatus may be further limited.

It should be understood that the first apparatus sends the first reference signal based on a first power value. The first power value may be determined based on one or more of the following: a maximum value of the transmit power of the first apparatus, *α*₁*RSRP*₄ + *α*₂10log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$ .

*α*₁ to *α*₅ are configured or preconfigured coefficients greater than or equal to 0, *RSRP*₄ is a receive power of a fourth reference signal or the second reference signal, the fourth reference signal is from the second apparatus, *K* indicates a bandwidth of the first reference signal, PL is a path loss between the first apparatus and the receiver (for example, the second apparatus or another apparatus) of the second reference signal, and *N'* may be an integer configured by the third apparatus, preconfigured, or predefined, or *N'* may be a smallest integer satisfying $\frac{cN ′}{B} > D$. c is a speed of light, B is a bandwidth of the first reference signal, D is an allowed interference distance range of the first reference signal, D may be configured by the third apparatus, preconfigured, or predefined, and A and C are constants.

**In an example,** considering a limitation of a maximum transmit power Pmax of the first apparatus, the transmit power for sending the first reference signal by the first apparatus is less than or equal to the maximum transmit power Pmax of the first apparatus, that is, the first power value is less than or equal to the maximum value of the transmit power of the first apparatus.

**In another example,** considering that the first reference signal sent by the first apparatus is used to simulate the reflected signal of the second reference signal by the user associated with the first apparatus, the transmit power of the first reference signal needs to be equivalent to or approximate to the receive power for receiving the second reference signal by the first apparatus. Therefore, based on the foregoing consideration, the first power value may be determined based on the receive power for receiving the fourth reference signal by the first apparatus.

The fourth reference signal is from the second apparatus, and the fourth reference signal and the third reference signal may be a same reference signal or different reference signals. This is not limited in this application. The receive power of the fourth reference signal is used by the first apparatus to determine the transmit power for sending the first reference signal.

It should be understood that, a higher transmit power for sending the first reference signal by the first apparatus indicates a better effect of interference to the reflected signal of the second reference signal.

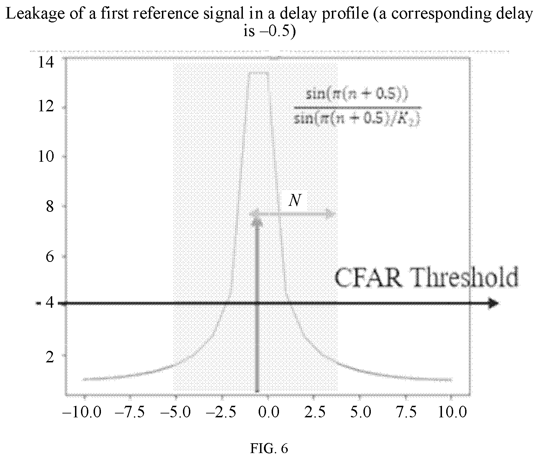

**In still another example,** considering that when the power for sending the first reference signal by the first apparatus is excessively high, large leakage in a power delay profile may be caused, and consequently, the first reference signal may cause large interference to a sensing result of another user. As shown in FIG. 6, leakage of the first reference signal in a delay profile is shown. It can be learned that, when the transmit power of the first reference signal is excessively high, the second apparatus detects that side lobe energy of the first reference signal is excessively high. Consequently, a case in which no reflecting object originally exists in the delay, but the receiver (for example, the second apparatus) of the second reference signal mistakenly considers that an object exists is caused, or a case in which the first reference signal also interferes with sensing information of a user existing in the delay is caused. Therefore, the first power value may be considered to be less than or equal to ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$ .

It should be understood that, based on the foregoing descriptions, the first power value may be determined based on the maximum value of the transmit power of the first apparatus, *α*₁*RSRP*₄ + *α*₂10 log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$. The first power value may be a value less than or equal to any one of the maximum value of the transmit power of the first apparatus, *α*₁*RSRP*₄ + *α*₂10 log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$, or the first power value may be a smallest value of the maximum value of the transmit power of the first apparatus, *α*₁*RSRP*₄ + *α*₂10 log(*K*) + *A*, and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$ .

It should be further understood that the first apparatus determines, based on the maximum value of the transmit power supported by the first apparatus, *α*₁*RSRP*₄ + *α*₂10 log(*K*) + *A* , and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C$ , the transmit power for sending the first reference signal, so that an effect of interference of the first reference signal to the sensing information of the user associated with the first apparatus can be ensured, and interference of the first reference signal to sensing information of a user associated with another apparatus can be reduced by controlling the transmit power of the first reference signal.

It should be noted that step 304 is decoupled from one or more of step 301 to step 303. Step 301 to step 303 are optional steps, in other words, step 301 to step 303 may not need to be performed. The first apparatus may perform only step 304 to interfere with the sensing information of the user associated with the first apparatus by sending the first reference signal, thereby meeting a privacy protection requirement of the user associated with the first apparatus.

With reference to the method shown in FIG. 3, the first apparatus sends the first reference signal, where the first reference signal is determined based on a sequence (for example, the first sequence) of the second reference signal and the first phase. The time-frequency resource of the first reference signal is the same as the time-frequency resource of the second reference signal, and the first reference signal can interfere with the sensing information of the user associated with the first apparatus, so that in a wireless sensing scenario, privacy protection is performed on the sensing information of the user associated with the first apparatus, thereby avoiding a problem of privacy leakage.

In addition, the first apparatus may send the first reference signal at the first moment, where the first moment is the moment at which the first apparatus receives the second reference signal. Alternatively, the first apparatus sends the first reference signal at the first moment, the time interval between the first moment and the second moment is not 0, and the second moment is the moment at which the first apparatus receives the second reference signal. The first apparatus may introduce an additional modulation signal into the frequency domain sequence corresponding to the first reference signal, which is equivalent to shifting the first reference signal in time domain, to enhance the correlation between the first reference signal and the second reference signal, ensure that the first reference signal can interfere with the sensing information of the user associated with the first apparatus, and meet a privacy protection requirement of the user associated with the first apparatus.

In addition, the transmit power for sending the first reference signal by the first apparatus is further limited, so that interference of the first reference signal to sensing information of another apparatus is reduced while an effect of interference of the first reference signal to the sensing information of the user associated with the first apparatus is ensured.

According to the method shown in FIG. 3, before step 301, the method may further include the following step.

300: Mutual authentication is performed between the first apparatus and the third apparatus.

It should be understood that the first apparatus performs mutual authentication with the third apparatus, where the mutual authentication is used by the third apparatus to determine that the first apparatus is a valid apparatus in an area in which the third apparatus is deployed. The mutual authentication between the first apparatus and the third apparatus is further used by the third apparatus to allow the first apparatus to perform, in the area in which the third apparatus is deployed, privacy protection on sensing information of a user associated with the apparatus.

It should be further understood that the third apparatus and the second apparatus may be a same apparatus or different apparatuses. When the third apparatus and the second apparatus are a same apparatus, the second apparatus is used as an example. After mutual authentication is performed between the first apparatus and the second apparatus, the first apparatus is a valid apparatus in an area in which the second apparatus is deployed, to be specific, the second apparatus allows the first apparatus to perform privacy protection on the sensing information of the user associated with the first apparatus. When the third apparatus and the second apparatus are different apparatuses, after the mutual authentication is performed between the first apparatus and the third apparatus, the first apparatus is a valid apparatus in the area in which the third apparatus is deployed, and the second apparatus is an apparatus in the area in which the third apparatus is deployed. Similarly, the first apparatus is a valid apparatus in an area in which the second apparatus is deployed, and the second apparatus allows the first apparatus to perform privacy protection on the sensing information of the user associated with the first apparatus.

According to the method shown in FIG. 3, after step 304, the method may further include the following step.

305: The fourth apparatus receives the second reference signal and the first reference signal, and obtains sensing information of an ambient environment of the second apparatus.

It should be understood that the fourth apparatus may be the third apparatus, the second apparatus, or another apparatus. This is not limited in this application.

For example, the fourth apparatus serves as a receiver apparatus of the second reference signal, to be specific, the fourth apparatus receives the second reference signal reflected or scattered by a user in the environment and the first reference signal of the first apparatus. The fourth apparatus determines the sensing information of the ambient environment of the second apparatus based on the reflected or scattered second reference signal. When determining the sensing information of the user associated with the first apparatus, the fourth apparatus determines, based on the second reference signal reflected or scattered by the user associated with the first apparatus and the first reference signal sent by the first apparatus, the sensing information of the user associated with the first apparatus.

It should be understood that, when the second apparatus performs wireless sensing on the ambient environment by using the second reference signal in a bistatic manner, the fourth apparatus and the second apparatus are different apparatuses, and the fourth apparatus determines the sensing information of the ambient environment based on the second reference signal reflected or scattered by the user in the ambient environment. When the second apparatus needs to obtain the sensing information of the ambient environment, and both the fourth apparatus and the second apparatus are terminal devices, the fourth apparatus may send the sensing information to the second apparatus over a sidelink. When the fourth apparatus is a network device and the second apparatus is a terminal apparatus, the fourth apparatus may send the sensing information to the second apparatus over a downlink. When the fourth apparatus is a terminal device and the second apparatus is a network device, the fourth apparatus may send the sensing information to the second apparatus over an uplink.

When the fourth apparatus and the second apparatus are a same apparatus, the second apparatus determines the sensing information of the ambient environment based on the received second reference signal reflected or scattered by the user in the ambient environment and the received first reference signal.

The following provides descriptions with reference to the scenario in FIG. 2 by using an example in which the second apparatus performs wireless sensing on the ambient environment by using the second reference signal in a monostatic manner, that is, the fourth apparatus and the second apparatus are a same apparatus.

In an example, with reference to the scenario shown in FIG. 2, it is assumed that the second apparatus is the UE #0 in FIG. 2, the UE #0 sends the second reference signal, and the UE #0 receives the second reference signal reflected or reflected by a user in an ambient environment.

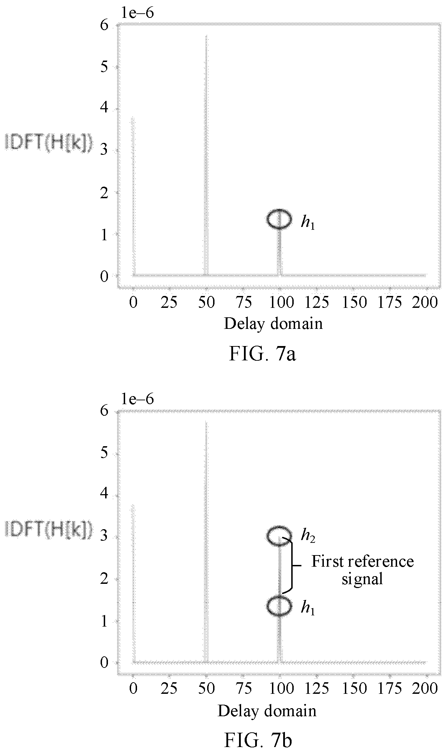

As shown in FIG. 7a, it is assumed that none of the user #1, the user #2, and the user #3 has a privacy protection requirement. The UE #0 sends the second reference signal, and receives second reference signals reflected by the user #1, the user #2, and the user #3 in the ambient environment. The UE #0 may detect three peak values in delay domain based on the reflected second reference signals. The three peaks respectively correspond to delays of the user #1, the user #2, and the user #3, or equivalent distances between the UE #0 and the user #1, the user #2, and the user #3, and reflection coefficients of the user #1, the user #2, and the user #3. The UE #0 sends the second reference signal to the ambient environment on a plurality of time domain resources, and the UE #0 can determine changes of the reflection coefficients of the user #1, the user #2, and the user #3 with time. The reflection coefficient is usually a complex number, to be specific, the reflection coefficient includes amplitude and phase information. When the user performs a micro motion (for example, breathing, heartbeats, or speaking of a person), a phase in the reflection coefficient may change. The UE #0 may restore information such as a breathing frequency, a heartbeat frequency, and speaking content of the person from the phase information.

As shown in FIG. 7b, it is assumed that the user #1 has a privacy protection requirement, and the user #2 and the user #3 do not have a privacy protection requirement. The UE #0 sends the second reference signal, and receives second reference signals reflected by the user #1, the user #2, and the user #3 in the ambient environment. In addition, the UE #0 receives a reference signal (for example, the first reference signal) sent by the UE #1 associated with the user #1. Because a base sequence of the first reference signal is the same as a base sequence of the second reference signal, the first reference signal simulates an echo of the second reference signal via the user associated with the UE #1. A process in which the UE #0 determines, based on the received reflected second reference signals, delay profiles corresponding to the user #2 and the user #3, and determines, based on reflection coefficients, related information corresponding to the user is similar to that in FIG. 7a. When the UE #0 determines, based on the received second reference signal reflected by the user #1 and the first reference signal, a delay profile corresponding to the user #1, because the first reference signal simulates the echo of the second reference signal via the user #1 for transmission, the UE #0 determines that a peak value corresponding to the delay profile of the user #1 is h2, where h2 is greater than a peak value h1 corresponding to a time-frequency spectrum determined based on the echo of the second reference signal via the user #1. Because the first reference signal is obtained based on a random phase (for example, the first phase), the first reference signal further causes the phase information corresponding to the reflection coefficient to change at any time, thereby interfering the UE #0 in obtaining related information about the user #1, and protecting privacy of the user #1. In addition, there is only one peak value in the delay profile of the first reference signal, and the first reference signal does not affect sensing information of another user (for example, the user #2 or the user #3).

It may be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that, in the foregoing method embodiments, the methods and operations implemented by an apparatus (the first apparatus or the second apparatus) may alternatively be implemented by a component (for example, a chip or a circuit) of the apparatus. This is not limited.

In correspondence to the method provided in the foregoing method embodiments, an embodiment of this application further provides a corresponding apparatus. The apparatus includes a corresponding module configured to perform the foregoing method embodiments. The modules may be software, hardware, or a combination of software and hardware. It may be understood that the technical features described in the method embodiments are also applicable to the following apparatus embodiments.

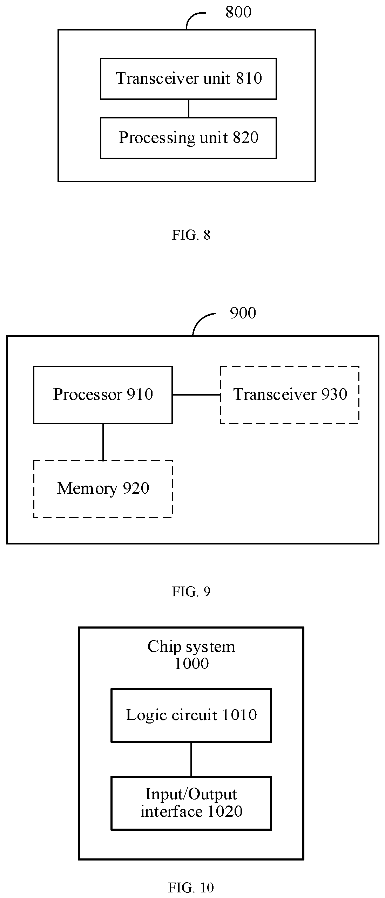

For example, FIG. 8 is a diagram of a communication apparatus 800 according to an embodiment of this application. The apparatus 800 includes a transceiver unit 810 and a processing unit 820. The transceiver unit 810 may be configured to implement a corresponding communication function. The transceiver unit 810 may also be referred to as a communication interface or a communication unit. The processing unit 820 may be configured to perform data or information processing.

Optionally, the apparatus 800 further includes a storage unit. The storage unit may be configured to store instructions and/or data. The processing unit 820 may read the instructions and/or the data in the storage unit, to cause the apparatus to implement the foregoing method embodiments.

In a possible design, the apparatus 800 may be configured to perform actions performed by the first apparatus in the foregoing method embodiments. In this case, the apparatus 800 may be the first apparatus or a component of the first apparatus. The transceiver unit 810 is configured to perform a receiving/sending-related operation of the first apparatus in the foregoing method embodiments. The processing unit 820 is configured to perform a processing-related operation of the first apparatus in the foregoing method embodiments.

For example, the transceiver unit 810 is configured to send a first reference signal, where a frequency resource corresponding to the first reference signal is the same as a time-frequency resource corresponding to a second reference signal, the first reference signal is determined based on a first phase and a first sequence, and the first sequence is a sequence of the second reference signal. The second reference signal is a reference signal used to obtain sensing information, and the first reference signal is a reference signal used to interfere with the sensing information or protect privacy.

It should be understood that the transceiver unit is further configured to perform receiving and sending processing of the first apparatus in FIG. 3.

In a possible implementation, the communication apparatus further includes the processing unit 820, and the processing unit is further configured to perform processing other than receiving and sending of the first apparatus in FIG. 3.

In a possible design, the apparatus 800 may be configured to perform actions performed by the second apparatus in the foregoing method embodiments. In this case, the apparatus 800 may be a terminal apparatus or a network apparatus, or a component of a terminal apparatus or a network apparatus. The transceiver unit 810 is configured to perform a receiving/sending-related operation of the second apparatus in the foregoing method embodiments. The processing unit 820 is configured to perform a processing-related operation of the second apparatus in the foregoing method embodiments.

For example, the transceiver unit 810 is configured to receive a first reference signal from the first apparatus, where a time-frequency resource corresponding to the first reference signal is the same as a time-frequency resource corresponding to a second reference signal, the first reference signal is determined based on a first phase and a first sequence, and the first sequence is a sequence of the second reference signal. The second reference signal is a reference signal used to obtain sensing information, and the first reference signal is a reference signal used to interfere with the sensing information or protect privacy.

It should be understood that the transceiver unit is further configured to perform receiving and sending processing of the second apparatus in FIG. 3.

In a possible implementation, the communication apparatus further includes the processing unit, and the processing unit is further configured to perform processing other than receiving and sending of the second apparatus in FIG. 3.

It should be understood that the apparatus 800 herein is presented in a form of a functional unit. The term "unit" herein may be an application-specific integrated circuit (application-specific integrated circuit, ASIC), an electronic circuit, a processor (for example, a shared processor, a dedicated processor, or a group processor) configured to execute at least one software or firmware program, a memory, a combined logic circuit, and/or another appropriate component that supports the described functions. In an optional example, a person skilled in the art may understand that the apparatus 800 may be specifically the first apparatus in the foregoing embodiments, and may be configured to perform procedures and/or steps corresponding to the first apparatus in the foregoing method embodiments.

The apparatus 800 in the foregoing solutions has a function of implementing corresponding steps performed by the first apparatus/second apparatus in the foregoing methods. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform receiving and sending operations and related processing operations in the method embodiments.

In addition, the transceiver unit 810 may alternatively be a transceiver circuit (for example, may include a receiving circuit and a sending circuit), and the processing unit may be a processing circuit.

It should be noted that the apparatus in FIG. 8 may be the apparatus in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

For example, FIG. 9 is a diagram of another communication apparatus 900 according to an embodiment of this application. The apparatus 900 includes a processor 910, and the processor 910 is coupled to a memory 920. Optionally, the apparatus 900 further includes the memory 920. The memory 920 is configured to store a computer program or instructions and/or data. The processor 910 is configured to execute the computer program or the instructions stored in the memory 920, or read the data stored in the memory 920, to perform the method in the foregoing method embodiments.

Optionally, there is at least one processor 910.

Optionally, there is at least one memory 920.

Optionally, the memory 920 and the processor 910 are integrated or disposed separately.

Optionally, as shown in FIG. 9, the apparatus 900 further includes a transceiver 930. The transceiver 930 is configured to receive and/or send a signal. For example, the processor 910 is configured to control the transceiver 930 to receive and/or send a signal.

In a solution, the apparatus 900 is configured to implement operations performed by the apparatus in the foregoing method embodiments.

For example, the processor 910 is configured to execute the computer program or the instructions stored in the memory 920, to implement related operations of the apparatus in the foregoing method embodiments, for example, the method performed by the apparatus (the first apparatus or the second apparatus) in the embodiment shown in FIG. 3.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification is intended to include, but is not limited to, these memories and any other appropriate type of memories.

For example, FIG. 10 is a diagram of a chip system 1000 according to an embodiment of this application. The chip system 1000 (or may be referred to as a processing system) includes a logic circuit 1010 and an input/output interface (input/output interface) 1020.

The logic circuit 1010 may be a processing circuit in the chip system 1000. The logic circuit 1010 may be coupled and connected to a storage unit, and invoke instructions in the storage unit, to cause the chip system 1000 to implement the methods and functions in embodiments of this application. The input/output interface 1020 may be an input/output circuit in the chip system 1000, and outputs information processed by the chip system 1000, or inputs to-be-processed data or signaling information to the chip system 1000 for processing.

Specifically, for example, if the chip system 1000 is installed in a first apparatus, the logic circuit 1010 is coupled to the input/output interface 1020, and the input/output interface 1020 may input a wake-up signal to the logic circuit 1010 for processing.

In a solution, the chip system 1000 is configured to implement operations performed by the first apparatus in the foregoing method embodiments.

For example, the logic circuit 1010 is configured to implement a processing-related operation performed by the first apparatus in the foregoing method embodiments, and the input/output interface 1020 is configured to implement a sending and/or receiving-related operation performed by the first apparatus in the foregoing method embodiments.

An embodiment of this application further provides a computer-readable storage medium. The computer-readable storage medium stores computer instructions for implementing the method performed by the apparatus in the foregoing method embodiments.

For example, when a computer program is executed by a computer, the computer is caused to implement the method performed by the first apparatus in the foregoing method embodiments.

For another example, when a computer program is executed by a computer, the computer is caused to implement the method performed by the second apparatus in the foregoing method embodiments.

An embodiment of this application further provides a computer program product, including instructions. When the instructions are executed by a computer, the method performed by the first apparatus or the second apparatus in the foregoing method embodiments is implemented.

An embodiment of this application further provides a communication system. The communication system includes the first apparatus and the second apparatus in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division in actual implementation. For example, at least two units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in electrical, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes at least one computer instruction. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating at least one usable medium. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing method, comprising:
sending, by a first apparatus, a first reference signal, wherein a time-frequency resource corresponding to the first reference signal is the same as a time-frequency resource corresponding to a second reference signal, the first reference signal is determined based on a first phase and a first sequence, and the first sequence is a sequence of the second reference signal, wherein
the second reference signal is a reference signal used to obtain sensing information, and the first reference signal is a reference signal used to interfere with the sensing information or protect privacy.

2. The method according to claim 1, wherein the sending, by the first apparatus, the first reference signal comprises:
sending, by the first apparatus, the first reference signal at a first moment, wherein
the first moment is the same as a moment at which the first apparatus receives the second reference signal, or the first moment is a moment estimated or predicted by the first apparatus for receiving the second reference signal, or the first moment is determined based on a moment at which the first apparatus receives a third reference signal, wherein the third reference signal is from the second apparatus.

3. The method according to claim 1 or 2, wherein the first reference signal is determined by multiplying the first sequence by the first phase.

4. The method according to claim 1, wherein the sending, by the first apparatus, the first reference signal comprises:
sending, by the first apparatus, the first reference signal at a first moment, wherein a time interval between the first moment and a second moment is a first time interval, and the second moment is a moment at which the first apparatus receives the second reference signal, or the second moment is a moment estimated or predicted by the first apparatus for receiving the second reference signal, or the second moment is determined based on a moment at which the first apparatus receives a third reference signal, wherein the third reference signal is from the second apparatus; and
the first reference signal is determined based on the first phase, the first sequence, and the first time interval, wherein the first time interval is not 0.

5. The method according to claim 4, wherein the first sequence comprises a first frequency sequence, a sequence of the first reference signal in frequency domain is a second frequency domain sequence, and a signal that is of the second frequency domain sequence and that is mapped to a subcarrier *k* is *Axₖ*exp(-*j*2*πfₖT*)exp(*jθ*), wherein
A is a complex constant, *xₖ* is a signal that is of the first frequency domain sequence and that is mapped to the subcarrier *k*, the first frequency domain sequence is a sequence of the second reference signal in frequency domain, *fₖ* is a center frequency of the subcarrier *k* or *fₖ* = *kf_{scs}*, *f_{scs}* is a subcarrier spacing, *T* is the first time interval, and *θ* is the first phase.

6. The method according to any one of claims 1 to 5, wherein the sending, by the first apparatus, the first reference signal comprises:
sending, by the first apparatus, the first reference signal based on a first power value, wherein the first power value is determined based on one or more of the following:
a maximum value of a transmit power of the first apparatus, ${α}_{1} {RSRP}_{4} + {α}_{2} 10 log \left(K\right) + A ,$ and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C ,$ wherein
*α*₁ to *α*₅ are configured or preconfigured coefficients greater than or equal to 0, *RSRP*₄ is a receive power of a fourth reference signal, the fourth reference signal is from the second apparatus, *K* indicates a bandwidth of the first reference signal, PL is a path loss between the first apparatus and a receiver of the second reference signal, *N'* is an integer, D is an allowed interference distance range of the first reference signal, and A and C are constants.

7. The method according to claim 6, wherein the first power value is a smallest value of one or more of the following:
the maximum value of the transmit power of the first apparatus, ${α}_{1} {RSRP}_{4} + {α}_{2} 10 log \left(K\right) + A ,$ and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C .$

8. The method according to any one of claims 1 to 7, wherein before the sending, by the first apparatus, the first reference signal, the method further comprises:
sending, by the first apparatus, first information, wherein the first information indicates that a user associated with the first apparatus has a privacy protection requirement for sensing information, and/or the first information indicates that the first apparatus is to send the first reference signal.

9. The method according to any one of claims 1 to 8, wherein before the sending, by the first apparatus, the first reference signal, the method further comprises:
receiving, by the first apparatus, second information, wherein the second information indicates configuration information of the second reference signal, and the configuration information of the second reference signal comprises information about a reference signal resource occupied by the second reference signal.

10. The method according to claim 8 or 9, wherein before the sending, by the first apparatus, the first information, the method further comprises:
performing, by the first apparatus, authentication with a third apparatus, wherein the authentication is used to determine that the first apparatus is capable of performing privacy protection on the sensing information of the user associated with the first apparatus.

11. The method according to any one of claims 1 to 10, wherein before the sending, by the first apparatus, the first reference signal, the method further comprises:
receiving, by the first apparatus, the configuration information of the second reference signal, wherein the configuration information of the second reference signal comprises the time-frequency resource corresponding to the second reference signal.

12. The method according to any one of claims 9 to 11, wherein the second information indicates that the second reference signal is used by the second apparatus to collect and/or estimate biometric sign data of a user within a coverage area of the second apparatus.

13. A sensing method, comprising:
receiving, by a second apparatus, a first reference signal from a first apparatus, wherein a time-frequency resource corresponding to the first reference signal is the same as a time-frequency resource corresponding to a second reference signal, the first reference signal is determined based on a first phase and a first sequence, and the first sequence is a sequence of the second reference signal, wherein
the second reference signal is a reference signal used to obtain sensing information, and the first reference signal is a reference signal used to interfere with the sensing information or protect privacy.

14. The method according to claim 13, wherein a sequence of the first reference signal is determined by multiplying the first sequence by the first phase.

15. The method according to claim 13, wherein a transmit power of the first reference signal is a first power value, and the first power value is determined based on one or more of the following:
a maximum value of a transmit power of the first apparatus, ${α}_{1} {RSRP}_{4} + {α}_{2} 10 log \left(K\right) + A ,$ and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C ,$ wherein
*α*₁ to *α*₅ are configured or preconfigured coefficients greater than or equal to 0, *RSRP*₄ is a receive power of a fourth reference signal, the fourth reference signal is from the second apparatus, *K* indicates a bandwidth of the first reference signal, PL is a path loss between the first apparatus and a receiver of the second reference signal, *N'* is an integer, D is an allowed interference distance range of the first reference signal, and A and C are constants.

16. The method according to claim 15, wherein the first power value is a smallest value of one or more of the following:
the maximum value of the transmit power of the first apparatus, ${α}_{1} {RSRP}_{4} + {α}_{2} 10 log \left(K\right) + A ,$ and ${α}_{3} PL + {α}_{4} 20 log \left(\frac{sin \left(π\left(N′+0.5\right)\right)}{sin \left(π\left(N′+0.5\right)/K\right)}\right) + {α}_{5} 10 log \left(K\right) + C .$

17. The method according to any one of claims 13 to 16, wherein before the receiving, by the second apparatus, the first reference signal from the first apparatus, the method further comprises:
receiving, by the second apparatus, first information from the first apparatus, wherein the first information indicates that a user associated with the first apparatus has a privacy protection requirement for sensing information, and/or the first information indicates that the first apparatus is to send the first reference signal.

18. The method according to any one of claims 13 to 17, wherein the method further comprises:
sending, by the second apparatus, second information, wherein the second information indicates configuration information of the second reference information, and the configuration information of the second reference signal comprises information about a reference signal resource occupied by the second reference signal.

19. The method according to claim 17 or 18, wherein before the receiving, by the second apparatus, the first reference signal from the first apparatus, the method further comprises:
performing, by the second apparatus, authentication with the first apparatus, wherein the authentication is used to determine that the first apparatus is capable of performing privacy protection on the sensing information of the user associated with the first apparatus.

20. The method according to any one of claims 10 to 14, wherein before the receiving, by the second apparatus, the first reference signal from the first apparatus, the method further comprises:
sending, by the second apparatus, the configuration information of the second reference signal, wherein the configuration information of the second reference signal comprises the time-frequency resource corresponding to the second reference signal.

21. The method according to any one of claims 18 to 20, wherein the second information indicates that the second reference signal is used by the second apparatus to collect and/or estimate biometric sign data of a user within a coverage area of the second apparatus.

22. A communication apparatus, comprising a processor, wherein the processor is configured to execute a computer program or instructions stored in a memory, to cause the apparatus to perform the method according to any one of claims 1 to 12 or the method according to any one of claims 13 to 21.

23. The apparatus according to claim 22, wherein the apparatus further comprises the memory and/or a communication interface, and the communication interface is coupled to the processor; and
the communication interface is configured to input and/or output information.

24. A computer-readable storage medium, wherein the computer-readable storage medium stores a computer program or instructions; and when the computer program or instructions are run on a communication apparatus, the communication apparatus is caused to perform the method according to any one of claims 1 to 12 or the method according to any one of claims 13 to 21.

25. A computer program product, wherein the computer program product comprises a computer program or instructions used to perform the method according to any one of claims 1 to 12, or a computer program or instructions used to perform the method according to any one of claims 13 to 21.

26. A chip, wherein the chip is coupled to a memory, and is configured to read and execute program instructions stored in the memory, to implement the method according to any one of claims 1 to 21.
